# EUROPEAN PATENT APPLICATION

(11) **EP 4 651 225 A1**
(43) Date of publication of application: **19.11.2025**
(21) Application number: 25167380.2
(22) Date of filing: 31.03.2025
(51) Int. Cl.: H01M 4/133, H01M 4/136, H01M 4/58, H01M 4/587, H01M 10/0525, H01M 4/02

(54) **RECHARGEABLE LITHIUM BATTERIES**

(30) Priority: 16.05.2024 KR 20240063791; 06.03.2025 KR 20250029271
(71) Applicant: SAMSUNG SDI CO., LTD., Yongin-si, Gyeonggi-do 17084 (KR)
(72) Inventor: HA, Eunhyeon, 17084 Yongin-si (KR)
(74) Representative: Marks & Clerk LLP

(57) **Abstract**

Disclosed is a rechargeable lithium battery, the rechargeable lithium battery including a positive electrode including a positive electrode current collector and a positive electrode active material layer on the positive electrode current collector and including a lithium iron phosphate-based positive electrode active material, a negative electrode including a negative electrode current collector and a negative electrode active material layer on the negative electrode current collector and including a carbon-based negative electrode active material, and an electrolyte. The positive electrode includes pores with a size of about 0.6 µm to about 1 µm, the positive electrode has a porosity that is greater than or equal to about 23%, and the negative electrode has an ionic resistance that is less than or equal to about 20 Ωcm².

## Description

### BACKGROUND

### 1. Field

Rechargeable lithium batteries are disclosed.

### 2. Description of the Related Art

Rechargeable lithium batteries are easy to carry, typically achieve high energy density, and are widely used as a driving power source for, e.g., mobile information terminals such as, e.g., smartphones and laptops, among others. Rechargeable lithium batteries with high safety and high capacity are advantageous as a driving power source for, e.g., hybrid vehicles or electric vehicles, or as a power storage power source.

Rechargeable lithium batteries capable of securing rapid charging characteristics as well as high capacity and high safety are advantageous, and accordingly, low-cost lithium iron phosphate-based oxides are sometimes used as positive electrode active materials. Such lithium iron phosphate-based oxides have a stable structure, and a desired or advantageous thermal stability as much as using a phosphoric acid-based material itself as a flame retardant material.

Assuming that the lithium iron phosphate-based oxides are or include a positive electrode active material, the high capacity may be achieved by increasing the positive electrode mixture density and the negative electrode mixture density. However, as the positive electrode mixture density is higher, the positive electrode active material is more densely positioned, reducing porosity and a pore size of the positive electrode, which may be disadvantageous for the rapid charging. In addition, as the negative electrode mixture density is higher, ionic resistance of the negative electrode may increase, which may also be disadvantageous for the rapid charging.

Accordingly, the positive and negative electrodes should be designed to secure high capacity and rapid charging characteristics, while using such lithium iron phosphate-based oxides as a positive electrode active material in order to achieve greater safety.

### SUMMARY

Some example embodiments include a rechargeable lithium battery capable of securing rapid charging characteristics while ensuring greater safety and higher capacity.

A rechargeable lithium battery according to some example embodiments includes a positive electrode including a positive electrode current collector, and a positive electrode active material layer located on the positive electrode current collector and including a lithium iron phosphate-based positive electrode active material, a negative electrode including a negative electrode current collector and a negative electrode active material layer located on the negative electrode current collector, and including a carbon-based negative electrode active material, and an electrolyte. The positive electrode includes pores with a size of about 0.6 µm to about 1 µm, the positive electrode has a porosity that is greater than or equal to about 23%, and the negative electrode has an ionic resistance of less than or equal to about 20 Ωcm².

At least some of the above and other features of the invention are set out in the claims.

A rechargeable lithium battery according to some example embodiments may be advantageous in securing rapid charging characteristics while ensuring greater safety and higher capacity.

### BRIEF DESCRIPTION OF THE DRAWINGS

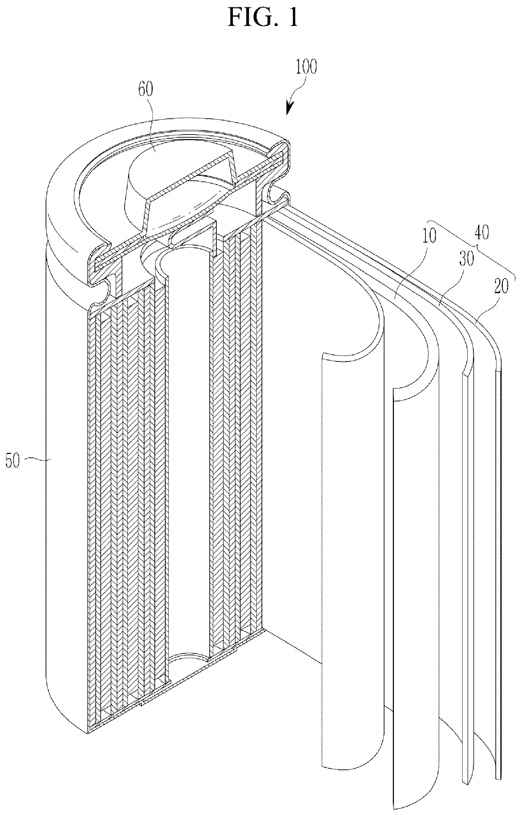

FIGS. 1 to 4 are schematic views illustrating rechargeable lithium batteries according to some example embodiments.

### DETAILED DESCRIPTION

Hereinafter, example embodiments will be described in detail so that those of ordinary skill in the art can readily implement the example embodiments. However, this disclosure may be embodied in many different forms, and is not construed as limited to the example embodiments set forth herein.

The terminology used herein describes example embodiments only, and is not intended to limit the present disclosure. The singular expression includes the plural expression unless the context clearly dictates otherwise.

As used herein, "combination thereof" describes a mixture, a laminate, a composite, a copolymer, an alloy, a blend, a reaction product, and the like of the constituents.

Herein, it should be understood that terms such as "comprises," "includes," or "have" are intended to designate the presence of an embodied feature, number, step, element, or a combination thereof, but these terms do not preclude the possibility of the presence or addition of one or more other features, numbers, steps, elements, or a combination thereof.

In the drawings, the thickness of layers, films, panels, regions, etc., may be exaggerated for clarity, and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

The average particle diameter may be measured by a method such as, for example, by a particle size analyzer, or by a transmission electron microscope image or a scanning electron microscope image. Alternatively, it is possible to obtain an average particle diameter value by measuring using a dynamic light scattering method, performing data analysis, counting the number of particles for each particle size range, and calculating from this. Unless otherwise defined, the average particle diameter may describe the diameter (D₅₀) of particles having a cumulative volume of 50 volume% in the particle size distribution. As used herein, when a definition is not otherwise provided, the average particle diameter describes a diameter (D₅₀) of particles having a cumulative volume of 50 volume% in the particle size distribution that is obtained by measuring the size (diameter or major axis length) of about 20 particles at random in a scanning electron microscope image.

Herein, "or" is not to be construed as an exclusive meaning, for example, "A or B" is construed to include "A," "B," "A+B," and the like.

"Metal" is interpreted as a concept including ordinary metals, transition metals and metalloids (semi-metals).

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

In some example embodiments, by using a lithium iron phosphate-based positive electrode active material to ensure safety and price competitiveness while controlling the thickness, mixture density, porosity, pore size, and ionic resistance of the negative electrode within an appropriate range, provided is a rechargeable lithium battery that can secure high capacity and rapid charging characteristics.

Hereinafter, the positive electrode, negative electrode, electrolyte, and rechargeable lithium battery will be described.

### Positive Electrode

The positive electrode according to some example embodiments includes a lithium iron phosphate-based positive electrode active material. For example, the positive electrode includes a positive electrode current collector, and a positive electrode active material layer located on the positive electrode current collector and including a lithium iron phosphate-based positive electrode active material.

For example, the lithium iron phosphate-based positive electrode active material may be represented by Chemical Formula 1 or 2.

Chemical Formula 1: Liₐ₁Fe₍₁₋ₓ₁₎M¹x₁PO₄

In Chemical Formula 1, 0.90≤a1≤1.5, 0≤x1≤0.4, and M¹ is Al, B, Ca, Ce, Cr, Cu, La, Mg, Mn, Mo, Nb, Ni, Si, Sn, Sr, Ti, V, W, Y, Zn, Zr, or a combination thereof. Herein, 0.90≤a1≤1.5, for example, 0.90≤a1≤1.2, or 0.95≤a1≤1.1. Additionally, 0≤x1≤0.4, 0≤x1≤0.3, 0≤x1≤0.2, 0≤x1≤0.1, or 0≤x1≤0.05.

Chemical Formula 2: Lia₂Mnₓ₂Fe_{(1-x2-y2)}M²_{y2}PO₄

In Chemical Formula 2, 0.90≤a2≤1.5, 0.1≤x2≤0.9, 0≤y2≤0.9, and M² is Al, B, Ca, Ce, Cr, Cu, La, Mg, Mo, Nb, Ni, Si, Sn, Sr, Ti, V, W, Y, Zn, Zr, or a combination thereof. Herein, 0.90≤a2≤1.5, or for example, 0.90≤a2≤1.2, or 0.95≤a2≤1.1. Additionally, 0.1≤x2≤0.9, 0.3≤x2≤0.9, or 0.4≤x2≤0.8, and 0≤y2≤0.4, 0≤y2≤0.3, 0≤y2≤0.2, 0≤y2≤0.1, or 0≤y2≤0.05.

The positive electrode according to some example embodiments can secure price competitiveness, heat resistance, and high safety by including the lithium iron phosphate-based positive electrode active material.

The positive electrode active material including the lithium iron phosphate-based compound is in the form of particles, and the average particle diameter (D₅₀) of the particles may be about 0.01 µm to about 4 µm, for example, about 0.1 µm to about 3.5 µm, about 0.2 µm to about 3 µm, about 0.3 µm to about 2.5 µm, about 0.4 µm to about 2 µm, or about 0.6 µm to about 1.5 µm. The lithium iron phosphate-based positive electrode active material may be in the form of secondary particles in which a plurality of primary particles are agglomerated, in the form of single particles, or a combination thereof. The secondary particles may be or include an agglomeration of primary particles with a size of about 10 nm to about 400 nm, and the average particle diameter of the secondary particles may be about 2 µm to about 15 µm. The average particle diameter of the single particles may be about 10 nm to about 900 nm, or about 100 nm to about 300 nm. Herein, the average particle diameter may be obtained by measuring the sizes of about 20 random particles through an electron microscope to obtain a particle size distribution, and taking the size (D₅₀) of particles with a cumulative volume of 50% by volume as the average particle diameter.

The lithium iron phosphate-based positive electrode active material may further include a carbon coating layer on the particle surface. The carbon coating layer can improve the electrical conductivity of the lithium iron phosphate-based positive electrode active material and lower the resistance of the positive electrode. The carbon coating layer may be, for example, derived from at least one raw material such as or including at least one of glucose, sucrose, lactose, starch, oligosaccharide, polyoligosaccharide, fructose, cellulose, a polymer of furfuryl alcohol, a block copolymer of ethylene and ethylene oxide, a vinyl resin, a cellulose resin, a phenol resin, a pitch-based resin, and a tar-based resin. For example, the raw material may be placed on the surface of the lithium iron phosphate-based positive electrode active material particles, and subsequently fired to form a carbon coating layer.

An amount of the lithium iron phosphate-based positive electrode active material may be about 60 wt% to about 99.9 wt%, about 70 wt% to about 99.8 wt%, about 80 wt% to about 99 wt%, or about 90 wt% to about 98 wt% based on 100 wt% of the positive electrode active material layer. By including the lithium iron phosphate-based positive electrode active material in the above-described amount in the positive electrode, rapid charging performance can be improved while ensuring price competitiveness, capacity, and safety.

The positive electrode can ensure price competitiveness and high safety by including the lithium iron phosphate-based positive electrode active material, and can secure high capacity and rapid charging characteristics by appropriately adjusting the thickness, mixture density, porosity, and pore size of the positive electrode.

The positive electrode according to some example embodiments includes pores having a size of about 0.6 µm to about 1 µm. In another example, the pore size of the positive electrode may be greater than or equal to about 0.61 µm, greater than or equal to about 0.62 µm, or greater than or equal to about 0.63 µm, and less than or equal to about 0.95 µm, less than or equal to about 0.9 µm, less than or equal to about 0.89 µm, less than or equal to about 0.88 µm, less than or equal to about 0.87 µm, or less than or equal to about 0.86 µm. Herein, the size of the pores in the positive electrode can be measured through the Mercury Intrusion method. Specifically, a Mercury Porosimeter can be used to intrude mercury into the pores of the sample by applying a pressure of 360,000 to 361,727 psia, and the total pore volume, pore size and distribution, and pore surface area can be measured based on the amount of mercury intruded. In addition, the size of the pore may describe a diameter if the pore cross-section is circular, a length of the major axis if the pore cross-section is oval, and a length of the longest side if the pore cross-section is irregular. The pores with a size of about 0.6 µm to about 1 µm in the positive electrode can be formed by appropriately adjusting the particle size and physical properties of the lithium iron phosphate-based positive electrode active material, the formation and drying conditions of the positive electrode active material layer, and the compressing conditions of the positive electrode. When a positive electrode, including a lithium iron phosphate-based positive electrode active material, includes pores with a size of about 0.6 µm to about 1 µm, rapid charging characteristics can be improved. Herein, the size of the pores may be an average size of the pores. The size of the pores in the positive electrode may more specifically mean the size of the pores in the positive electrode active material layer.

The porosity of the positive electrode according to some example embodiments may be greater than or equal to about 23%. In another example, the porosity of the positive electrode may be greater than or equal to about 23.5%, greater than or equal to about 24%, greater than or equal to about 24.5%, or greater than or equal to about 25%, or less than or equal to about 50%, less than or equal to about 45%, less than or equal to about 40%, less than or equal to about 35%, or less than or equal to about 33%. The porosity of the positive electrode can be measured through the Mercury Intrusion method. Specifically, a Mercury Porosimeter can be used to intrude mercury into the pores of the sample by applying a pressure of 360,000 to 361,727 psia, and the total pore volume, pore size and distribution, and pore surface area can be measured based on the amount of mercury intruded. The porosity of the positive electrode can be adjusted to a range of greater than or equal to about 23% by appropriately adjusting the particle size and physical properties of the lithium iron phosphate-based positive electrode active material, the formation and drying conditions of the positive electrode active material layer, and the compressing conditions of the positive electrode to reduce the positive electrode mixture density.

The positive electrode includes a lithium iron phosphate-based positive electrode active material, and when the size and porosity of pores included in the positive electrode are within the above-mentioned range, high stability, high capacity, and rapid charging characteristics can be secured.

The positive electrode active material layer may optionally further include other types of positive electrode active materials in addition to the lithium iron phosphate-based positive electrode active material.

The other types of positive electrode active materials may be applied without limitation as long as the positive electrode active materials are common positive electrode active materials in rechargeable lithium batteries, and for example, compounds capable of reversible intercalation and deintercalation of lithium (lithiated intercalation compounds) may be used. For example, one or more composite oxides of a metal such as or including at least one of cobalt, manganese, nickel, and a combination thereof, and lithium may be used. For example, the positive electrode active material may include a lithium transition metal composite oxide, and examples may include at least one of lithium nickel-based oxide, lithium cobalt-based oxide, lithium manganese-based oxide, cobalt-free lithium nickel-manganese-based oxide, and lithium-manganese-rich composite oxide, or a combination thereof. This positive electrode active material may be mixed with the above-described lithium iron phosphate-based positive electrode active material and applied to the positive electrode, and an amount of the positive electrode active material may be, for example, about 1 wt% to about 40 wt%, or about 5 wt% to about 20 wt% based on 100 wt% of the positive electrode active material layer.

The positive electrode active material layer may further include a binder and/or a conductive material.

The binder improves binding properties of positive electrode active material particles with one another and with a current collector. Examples of binders may include at least one of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but are not limited thereto. An amount of the binder may be about 0.1 wt% to about 5 wt% based on 100 wt% of the positive electrode active material layer.

The conductive material may be included to provide electrode conductivity, and any electrically conductive material may be a conductive material unless the electrically conductive material causes a chemical change in the battery. Examples of the conductive material may include a carbon-based material such as at least one of natural graphite, artificial graphite, carbon black, acetylene black, ketjen black, a carbon fiber, a carbon nanofiber, a carbon nanotube, and the like; a metal-based material of a metal powder or a metal fiber including at least one of copper, nickel, aluminium, silver, and the like; a conductive polymer such as a polyphenylene derivative; or a mixture thereof. An amount of the conductive material may be about 0.1 wt% to about 5 wt% based on 100 wt% of the positive electrode active material layer.

The positive electrode current collector is not particularly limited as long as the positive electrode current collector has conductivity without causing chemical changes in the rechargeable lithium battery, and may be or include aluminium foil with a thickness of about 10 µm to about 15 µm.

The positive electrode can be manufactured according to a conventional positive electrode manufacturing method. For example, the positive electrode may be manufactured by mixing a positive electrode active material and, optionally, a binder and/or a conductive material in a solvent to prepare a positive electrode active material slurry, coating the positive electrode active material slurry on a positive electrode current collector, and drying and compressing.

The solvent may be or include a common solvent, such as, e.g., at least one of dimethyl sulfoxide (DMSO), isopropyl alcohol, N-methylpyrrolidone (NMP), acetone, or water, etc., and one type of these solvents may be used alone, or a mixture of two or more types may be used. The amount of the solvent is sufficient to dissolve or disperse the positive electrode active material, conductive material, and binder in consideration of the coating thickness and manufacturing yield of the slurry, and to have a viscosity that can exhibit a desired or advantageous thickness uniformity when coated for subsequent manufacturing of the positive electrode.

Because the mixture density, porosity, pore size and thickness, etc. may vary depending on the loading level, drying conditions, and compressing conditions of the positive electrode active material layer, it is necessary to appropriately adjust the loading level, drying conditions, and compressing condition of the positive electrode active material layer.

The loading level of the positive electrode active material layer per area of the positive electrode current collector is not particularly limited, but may be, for example, about 20 mg/cm² to about 50 mg/cm². The loading level of the positive electrode active material layer per area of the positive electrode current collector may be about 25 mg/cm² to about 45 mg/cm², about 30 mg/cm² to about 40 mg/cm², or about 35 mg/cm² to about 40 mg/cm².

The drying may be performed at a temperature of about 100 °C to about 180 °C. The drying may be performed at a constant temperature, or may be performed by raising, e.g., sequentially raising, the temperature. When the drying is performed by raising, e.g., sequentially raising, the temperature, the drying may be divided into 2 to 4 steps. The drying according to some example embodiments may be performed in, e.g., four steps, and the drying temperature for each step may be about 138 °C, about 142 °C, about 145 °C, and about 150 °C, but is not limited thereto.

The compressing may be performed using compressing rolls at a temperature of about 20 °C to about 25 °C. The temperature of the compressing roll can be appropriately adjusted depending on the purpose.

During the compressing, the compressing line pressure may be about 0.5 ton/cm to about 1 ton/cm. The compressing line pressure may be greater than or equal to about 0.55 ton/cm, greater than or equal to about 0.6 ton/cm, greater than or equal to about 0.65 ton/cm, greater than or equal to about 0.7 ton/cm, greater than or equal to about 0.75 ton/cm, or greater than or equal to about 0.8 ton/cm, and less than or equal to about 0.99 ton/cm, less than or equal to about 0.98 ton/cm, less than or equal to about 0.97 ton/cm, less than or equal to about 0.96 ton/cm, or less than or equal to about 0.95 ton/cm. By adjusting the compressing line pressure during compressing within the range described above, the compressing can be controlled to achieve the desired mixture density, and thus can be adjusted to have the desired porosity and pore size of the positive electrode.

The mixture density of the positive electrode active material layer formed according to the compressing conditions (particularly, compressing line pressure) may be about 1 g/cc to about 2.69 g/cc. The mixture density refers to a weight per unit volume of the positive electrode active material layer on the current collector in the positive electrode. For example, the mixture density of the positive electrode active material layer may be greater than or equal to about 1.5 g/cc, greater than or equal to about 2 g/cc, greater than or equal to about 2.1 g/cc, greater than or equal to about 2.2 g/cc, and less than or equal to about 2.65 g/cc, less than or equal to about 2.6 g/cc, less than or equal to about 2.55 g/cc, less than or equal to about 2.5 g/cc, or less than or equal to about 2.45 g/cc. By adjusting the mixture density of the positive electrode active material layer to be within any of the above-mentioned ranges, the capacity and energy density can be improved, and rapid charging characteristics can be improved by satisfying the porosity and pore size of the positive electrode described above.

A thickness of the positive electrode active material layer may be about 145 µm to about 180 µm. For example, the thickness of the positive electrode active material layer may be about 147 µm to about 178 µm, about 150 µm to about 178 µm, or about 155 µm to about 175 µm. The thickness of the positive electrode active material layer may be measured through SEM images of the cross-section of the compressed positive electrode. When the thickness of the positive electrode active material layer satisfies any of the above ranges, capacity and energy density can be improved, and at the same time, rapid charging characteristics can be improved by adjusting the pore size and porosity within the positive electrode described above.

### Negative Electrode

The negative electrode according to some example embodiments includes a carbon-based negative electrode active material. For example, the negative electrode includes a negative electrode current collector and a negative electrode active material layer located on the negative electrode current collector and including a carbon-based negative electrode active material.

The carbon-based negative electrode active material may include crystalline carbon, amorphous carbon, or a combination thereof. The crystalline carbon may be irregular, or sheet, flake, spherical, or fiber shaped natural graphite or artificial graphite. The amorphous carbon may be or include at least one of a soft carbon, a hard carbon, a mesophase pitch carbonization product, calcined coke, and the like. The soft carbon refers to a carbon material that can be graphitized, and is a material that is readily graphitized by heat treatment at a high temperature, for example, at about 2800 °C. The hard carbon is or includes a carbon material that cannot be graphitized, or that is finely graphitized by heat treatment.

The negative electrode active material layer may further include other types of negative electrode active materials in addition to the carbon-based negative electrode active material, and may further include, for example, at least one of a lithium metal, an alloy of lithium metal, and a material capable of doping and dedoping lithium.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, SiOₓ (0 < x ≤2), a Si-Q alloy (wherein Q is an element such as or including at least one of an alkali metal, an alkaline-earth metal, a Group 13 element, a Group 14 element (excluding Si), a Group 15 element, a Group 16 element, a transition metal, a rare earth element, and a combination thereof), or a combination thereof. The Sn-based negative electrode active material may be or include at least one of Sn, SnO₂, a Sn-based alloy, or a combination thereof.

The silicon-carbon composite may be or include a composite of silicon and amorphous carbon. According to some example embodiments, the silicon-carbon composite may be in the form of silicon particles and amorphous carbon coated on the surface of the silicon particles. For example, the silicon-carbon composite may include a secondary particle (core) in which silicon primary particles are assembled, and an amorphous carbon coating layer (shell) on the surface of the secondary particle. The amorphous carbon may also be present between the silicon primary particles, for example, the silicon primary particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles, and an amorphous carbon coating layer on the surface of the core.

The Si-based negative electrode active material or Sn-based negative electrode active material may be mixed with the carbon-based negative electrode active material.

An amount of the negative electrode active material may be about 90 wt% to about 99.8 wt%, or about 94 wt% to about 99 wt% based on 100 wt% of the negative electrode active material layer.

The negative electrode active material layer may further include a binder and/or a conductive material. The binder is configured to sufficiently adhere the negative electrode active material particles to each other, and also to adhere the negative electrode active material to the current collector. The binder may be or include at least one of a non-aqueous binder, an aqueous binder, a dry binder, or a combination thereof.

The non-aqueous binder may include at least one of polyvinylchloride, carboxylated polyvinylchloride, polyvinylfluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include at least one of a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be or include at least one of Na, K, or Li.

The dry binder may be or include a polymer material capable of becoming fiber, and may be or include, for example, at least one of polytetrafluoroethylene, polyvinylidene fluoride, a polyvinylidene fluoride-hexafluoropropylene copolymer, polyethylene oxide, or a combination thereof. An amount of the binder may be about 0.1 wt% to about 5 wt%, or about 0.5 wt% to about 3 wt% based on 100 wt% of the negative electrode active material layer.

The conductive material is included to provide electrode conductivity, and any electrically conductive material may be a conductive material unless the electrically conductive material causes a chemical change in the battery. Examples of the conductive material include a carbon-based material such as or including at least one of natural graphite, artificial graphite, carbon black, acetylene black, ketjen black, a carbon fiber, a carbon nanofiber, a carbon nanotube, and the like; a metal-based material of a metal powder or a metal fiber including at least one of copper, nickel, aluminium silver, and the like; a conductive polymer such as a polyphenylene derivative; or a mixture thereof. An amount of the conductive material may be about 0.1 wt% to about 5 wt%, or about 0.5 wt% to about 3 wt% based on 100% by weight of the negative electrode active material layer.

The negative electrode current collector is not particularly limited as long as the negative electrode current collector has conductivity without causing chemical changes in the rechargeable lithium battery, and may be copper foil with a thickness of about 10 µm to about 15 µm.

The method of manufacturing the negative electrode may include, for example, mixing a negative electrode active material and optionally a binder and/or a conductive material in a solvent on a negative electrode current collector to prepare a negative electrode active material slurry, coating the negative electrode active material slurry on a negative electrode current collector, followed by drying and compressing.

The solvent may be the same type as the solvent included in the positive electrode active material slurry, or may be or include an aqueous solvent.

The negative electrode according to some example embodiments has an ionic resistance that is less than or equal to about 20 Ωcm². For example, the ionic resistance of the negative electrode may be less than or equal to about 20 Ωcm², less than or equal to about 19.5 Ωcm², less than or equal to about 19 Ωcm², or less than or equal to about 18.8 Ωcm². The lower limit of the ionic resistance of the negative electrode is not limited, but may be greater than or equal to about 15 Ωcm², greater than or equal to about 15.5 Ωcm², greater than or equal to about 16 Ωcm², greater than or equal to about 16.5 Ωcm², greater than or equal to about 17 Ωcm², or greater than or equal to about 17.6 Ωcm². The ionic resistance of the negative electrode can be measured, for example, making a symmetric cell consisting of two negative electrodes, setting the amplitude Va value to 5 mV, measuring SC-EIS (square current electrochemical impedance spectroscopy), and using the measured result value to isolate only the resistance to movement of ions among the internal resistance of the negative electrode using the transmission line model theory, thereby measuring the ionic resistance. The ionic resistance of the negative electrode refers to a resistance to movement of ions among the internal resistance of the negative electrode active material layer. In some example embodiments, rapid charging and discharging performance and output characteristics can be improved by designing the ionic resistance of the negative electrode including the carbon-based negative electrode active material to be less than or equal to about 20 Ωcm². The ionic resistance of the negative electrode can be adjusted to a range of less than or equal to about 20 Ωcm² by adjusting the type of negative electrode active material, the loading level of the negative electrode active material layer, the drying conditions of the negative electrode, and the compressing conditions (for example, the compressing line pressure).

As described above, the ionic resistance of the negative electrode may vary depending on the loading level, drying conditions, and compressing conditions of the negative electrode active material layer, and thus it is necessary to appropriately adjust the loading level, drying conditions, and compressing conditions (for example, compressing line pressure) of the negative electrode active material layer.

The loading level of the negative electrode active material layer per area of the negative electrode current collector is not particularly limited, but may be, for example, about 10 mg/cm² to about 35 mg/cm². The loading level of the negative electrode active material layer per area of the negative electrode current collector may be about 15 mg/cm² to about 30 mg/cm², about 20 mg/cm² to about 30 mg/cm², or about 20 mg/cm² to about 25 mg/cm².

The drying may be performed at a temperature of about 20 °C to about 120 °C. For example, the drying temperature may be greater than or equal to about 30 °C, greater than or equal to about 40 °C, greater than or equal to about 50 °C, greater than or equal to about 60 °C, or greater than or equal to about 70 °C, and may be less than or equal to about 110 °C, less than or equal to about 100 °C, less than or equal to about 90 °C, less than or equal to about 80 °C, or less than or equal to about 70 °C. Because the ionic resistance of the negative electrode increases as the drying temperature is higher or the drying speed is faster, the drying temperature can be adjusted within the above-mentioned range when manufacturing the negative electrode to ensure the ionic resistance of the negative electrode within the above-described range.

The compressing may be performed under the same conditions as when compressing on the positive electrode, except for the compressing line pressure.

The compressing line pressure during the compressing may be about 0.01 ton/cm to about 0.1 ton/cm. The compressing line pressure may be greater than or equal to about 0.02 ton/cm, greater than or equal to about 0.03 ton/cm, greater than or equal to about 0.04 ton/cm, or greater than or equal to about 0.05 ton/cm, and may be less than or equal to about 0.099 ton/cm, less than or equal to about 0.098 ton/cm, less than or equal to about 0.097 ton/cm, less than or equal to about 0.096 ton/cm, less than or equal to about 0.095 ton/cm, or less than or equal to about 0.094 ton/cm. By adjusting the compressing line pressure during compressing within any of the above-described ranges, the compressing line pressure can be controlled to achieve the desired mixture density, and thus can be adjusted to have the desired ionic resistance of the negative electrode.

The mixture density of the negative electrode active material layer formed according to the compressing conditions (particularly, compressing line pressure) may be about 1 g/cc to about 1.59 g/cc. The mixture density refers to a weight per unit volume of the negative electrode active material layer on the current collector in the negative electrode. For example, the mixture density of the negative electrode active material layer may be greater than or equal to about 1.1 g/cc, greater than or equal to about 1.2 g/cc, greater than or equal to about 1.3 g/cc, greater than or equal to about 1.4 g/cc, or greater than or equal to about 1.43 g/cc, and may be less than or equal to about 1.58 g/cc, less than or equal to about 1.57 g/cc, less than or equal to about 1.56 g/cc, less than or equal to about 1.55 g/cc, less than or equal to about 1.54 g/cc, or less than or equal to about 1.53 g/cc. By adjusting the mixture density of the negative electrode active material layer to be within the above-mentioned range, the ionic resistance value of the above-mentioned negative electrode can be satisfied, and high stability, high capacity, and rapid charging characteristics can be secured according to assembly with the above-mentioned positive electrode.

A thickness of the negative electrode active material layer may be about 100 µm to about 200 µm. For example, the thickness of the negative electrode active material layer may be greater than or equal to about 105 µm, greater than or equal to about 110 µm, greater than or equal to about 115 µm, greater than or equal to about 120 µm, or greater than or equal to about 125 µm, and may be less than or equal to about 145 µm, less than or equal to about 140 µm, less than or equal to about 135 µm, or less than or equal to about 130 µm. As the negative electrode active material layer becomes thicker, the capacity may increase, but there is a problem that the ionic resistance of the negative electrode increases. As the negative electrode active material layer becomes thinner, the ionic resistance of the negative electrode may decrease, but there is a problem that the capacity decreases. However, in some example embodiments, the mixture density of the negative electrode active material layer can be adjusted within an appropriate range by appropriately adjusting the compressing conditions (for example, the compressing line pressure), etc., and thereby the thickness of the negative electrode active material layer can be controlled to a thickness that can secure ionic resistance within the above-mentioned range, and high capacity and rapid charging characteristics can be secured.

### Electrolyte

For example, the electrolyte for a rechargeable lithium battery may be or include an electrolyte solution, which includes a non-aqueous organic solvent and a lithium salt.

The non-aqueous organic solvent may constitute a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like. The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include at least one of ethanol, isopropyl alcohol, and the like and the aprotic solvent may include at least one of nitriles such as R-CN (wherein R is a C2 to C20 linear, branched, or cyclic hydrocarbon group, a double bond, an aromatic ring, or an ether group, and the like); amides such as dimethylformamide; dioxolanes such as 1,3-dioxolane, 1,4-dioxolane, and the like; sulfolanes, and the like.

The non-aqueous organic solvent can be used alone or in a mixture of two or more types of solvents.

When using a carbonate-based solvent, a cyclic carbonate and a chain carbonate may be mixed and used, and the cyclic carbonate and the chain carbonate may be mixed in a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt may include at least one of LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl) imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

### Separator

Depending on the type of the rechargeable lithium battery, a separator may be present between the positive electrode and the negative electrode. The separator may include at least one of polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be or include a polymer film formed of or including any one polymer including a polyolefin such as or including at least one of polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene(for example, TEFLON^{®}), or a copolymer or mixture of two or more thereof.

The organic material may include a polyvinylidene fluoride-based polymer or a (meth)acrylic-based polymer.

The inorganic material may include inorganic particles such as or including at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be mixed in one coating layer, or a coating layer including an organic material and a coating layer including an inorganic material may be stacked.

### Rechargeable Lithium Battery

A rechargeable lithium battery according to some example embodiments includes the above-described positive electrode, negative electrode, and electrolyte.

The rechargeable lithium battery can exhibit rapid charging characteristics by including the positive and negative electrodes described above. The rapid charging characteristics may be evaluated as successful if the charging amount is greater than or equal to about 80% when charged for 25 minutes at a constant current of 1.68 C at 25 °C.

That is, the rechargeable lithium battery may have a charging amount that is greater than or equal to about 80% when charged for 25 minutes at a constant current of 1.68 C at 25 °C.

In addition, when the rechargeable lithium battery is charged at 25 °C with a constant current of 1.68 C for 25 minutes and discharged at 0.05 C once, an amount of lithium precipitation on the negative electrode surface, analyzed through a voltage graph according to capacity during discharge may be less than or equal to about 1 wt% based on 100 wt% of the negative electrode active material layer. For example, the amount of lithium precipitation may be less than or equal to about 0.99 wt%, less than or equal to about 0.95 wt%, or less than or equal to about 0.90 wt%. The lower limit of the amount of lithium precipitation is not limited, but may be greater than or equal to 0 wt%. A rechargeable lithium battery according to some example embodiments may improve rapid charging characteristics by enabling smooth movement of lithium ions while realizing high capacity, and can realize a desired or advantageous performance due to a small amount of lithium precipitation on the negative electrode surface even under rapid charging conditions.

The rechargeable lithium battery may include a positive electrode, a negative electrode, a separator between the positive electrode and the negative electrode, and an electrolyte.

Some example embodiments include an all-solid-state rechargeable battery including the positive electrode, the negative electrode, and a solid electrolyte layer between the positive electrode and the negative electrode.

Hereinafter, for convenience, the configuration of a lithium-ion battery using a liquid electrolyte will be described in detail.

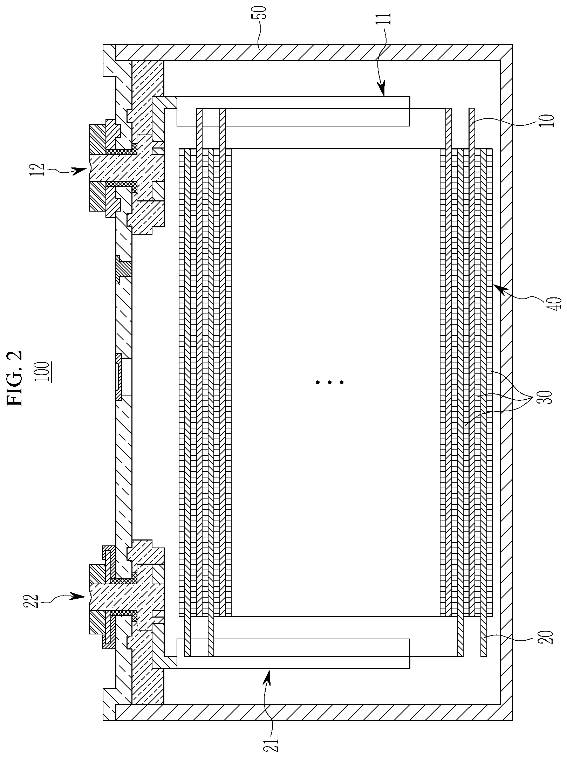

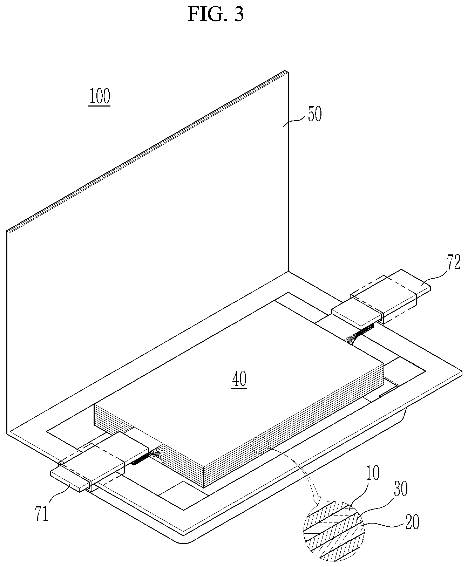

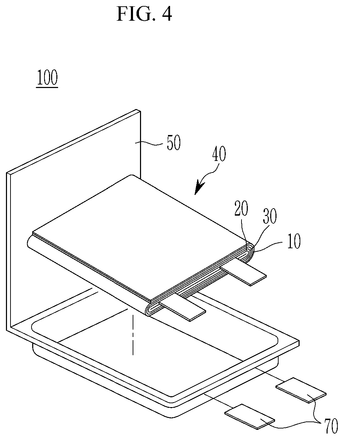

The rechargeable lithium battery may be classified into cylindrical, prismatic, pouch, coin, etc. depending on the shape. FIGS. 1 to 4 are schematic diagrams illustrating the rechargeable lithium battery according to some example embodiments, where FIG. 1 is a cylindrical battery, FIG. 2 is a prismatic battery, and FIGS. 3 and 4 are a pouch-shaped battery. Referring to FIGS. 1 to 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte (not shown). The rechargeable lithium battery 100 may include a sealing member 60 that seals the case 50 as shown in FIG. 1. Additionally, in FIG. 2, the rechargeable lithium battery 100 may include a positive electrode lead tab 11, a positive electrode terminal 12, a negative electrode lead tab 21, and a negative electrode terminal 22. As shown in FIGS. 3 and 4, the rechargeable lithium battery 100 includes an electrode tab 70 illustrated in FIG. 4, and a positive electrode tab 71 and a negative electrode tab 72 illustrated in FIG. 3, the tabs 70/71/72 forming an electrical path for inducing the current formed in the electrode assembly 40 to the outside of the rechargeable lithium battery 100.

Examples and comparative examples of the present disclosure are described below. However, the following examples are only examples of the present disclosure, and the present disclosure is not limited to the following examples.

### Examples and Comparative Examples

A positive electrode and a rechargeable lithium battery cell were manufactured in the following manner.

### Example 1

### (1) Manufacturing of Positive Electrode

LiFePO₄ having an average particle diameter (D₅₀) of 1.07 µm as a positive electrode active material, polyvinylidene fluoride as a binder, and carbon nanotube as a conductive material were mixed in a weight ratio of 96.36:2.44:1.2 (positive electrode active material:binder:conductive material) to prepare a positive electrode active material composition. This positive electrode active material composition was dispersed in an N-methyl pyrrolidone solvent to prepare a positive electrode active material slurry, which was coated on a 14 µm-thick Al foil at a loading level of 39.13 mg/cm² and sequentially, dried through four steps of 138 °C, 142 °C, 145 °C, and 150 °C and compressed to manufacture a positive electrode. The compression was performed with a roll at about 25 °C, while controlling a compressing line pressure to about 0.83 ton/cm.

Herein, after the compression, the positive electrode had a mixture density of about 2.23 g/cc, its positive electrode active material layer had a thickness of about 174 µm, and pores in the positive electrode had a size of about 0.86 µm and porosity of about 33%, which were measured according to a mercury intrusion method.

### (2) Manufacturing of Negative Electrode

97.5 wt% of graphite as a negative electrode active material, 1.5 wt% of carboxy methyl cellulose as a binder, and 1 wt% of a styrene butadiene rubber were dispersed in distilled water to prepare a negative electrode active material slurry. The negative electrode active material slurry was coated on an 8 µm-thick Cu foil at a loading level of 22.85 mg/cm², and subsequently dried at 70 °C and compressed to manufacture a negative electrode. Herein, the compression was performed in the same manner as in the manufacture of the positive electrode, with a difference that the compressing line pressure was changed to 0.0563 ton/cm.

Herein, after the compression, the negative electrode had a mixture density of about 1.42 g/cc, and its negative electrode active material layer had a thickness of about 163 µm, and the negative electrode had ionic resistance of about 18.8 Ωcm².

### (3) Manufacturing of Rechargeable Lithium Battery Cell

An electrode assembly was manufactured by interposing a 10 µm-thick polyethylene separator between the positive electrode and the negative electrode, inserting the electrode assembly into a case, and injecting an electrolyte to manufacture a rechargeable lithium battery cell (100 mAh level pouch cell). The electrolyte was prepared by mixing EC (ethylene carbonate):EMC (ethylmethyl carbonate):DMC (dimethyl carbonate) in a volume ratio of 2:4:4 and dissolving 1.15 M LiPF₆ in the mixed solvent.

### Example 2

A positive electrode, a negative electrode, and a rechargeable lithium battery cell were manufactured substantially in the same manner as in Example 1, with a difference that the compressing line pressure was changed to 0.92 ton/cm in the manufacture of the positive electrode.

Herein, after the compression, the positive electrode had a mixture density of 2.38 g/cc, the positive electrode active material layer of the positive electrode had a thickness of about 162 µm, and pores of the positive electrode had a size of about 0.69 µm and porosity of about 28%, which were measured according to a mercury intrusion method.

### Example 3

A positive electrode, a negative electrode, and a rechargeable lithium battery cell were manufactured substantially in the same manner as in Example 1, with a difference that the compressing line pressure was changed to 0.95 ton/cm in the manufacture of the positive electrode.

Herein, after the compression, the positive electrode had a mixture density of 2.44 g/cc, the positive electrode active material layer of the positive electrode had a thickness of about 156 µm, and pores in the positive electrode had a size of about 0.63 µm and porosity of about 25%, which were measured according to a mercury intrusion method.

### Example 4

A positive electrode, a negative electrode, and a rechargeable lithium battery cell were manufactured substantially in the same manner as in Example 1, with a difference that the compressing line pressure was changed to 0.0934 ton/cm during the manufacture of the negative electrode.

Herein, after the compression, the negative electrode had a mixture density of 1.53 g/cc, the negative electrode active material layer of the negative electrode had a thickness of about 152 µm, and the negative electrode had ionic resistance of about 17.6 Ωcm².

### Comparative Example 1

A positive electrode, a negative electrode, and a rechargeable lithium battery cell were manufactured substantially in the same manner as in Example 1, with a difference that the compressing line pressure was changed to 1.1 ton/cm in the manufacture of the positive electrode.

Herein, after the compression, the positive electrode had a mixture density of 2.7 g/cc, the positive electrode active material layer of the positive electrode had a thickness of about 145 µm, and pores in the positive electrode had a size of about 0.55 µm and porosity of about 22%, which were measured according to a mercury intrusion method.

### Comparative Example 2

A positive electrode, a negative electrode, and a rechargeable lithium battery cell were manufactured substantially in the same manner as in Example 1, with a difference that the compressing line pressure was changed to 0.1046 ton/cm in the manufacture of the negative electrode.

Herein, after the compression, the negative electrode had a mixture density of 1.6 g/cc, the negative electrode active material layer of the negative electrode had a thickness of about 146 µm, and the negative electrode had ionic resistance of about 21.2 Ωcm².

A loading level, a drying temperature, a compressing roll temperature, a compressing line pressure, and a mixture density of each of the positive electrodes of Examples 1 to 4 and Comparative Examples 1 to 2 and in addition, a loading level, a drying temperature, a compressing roll temperature, a compressing line pressure, and a mixture density of each of the negative electrodes, are summarized in Table 1.

**Table 1:**

| | Positive electrode | | | | | Negative electrode | | | | |
|---|---|---|---|---|---|---|---|---|---|---|
| | Loa ding level (mg/ cm²) | Drying temper ature | Comp ressin g roll tempe rature (°C) | Compre ssing line pressure (ton/cm) | Mixtu re densi ty (g/cc ) | Loa ding level (mg/ cm²) | Dryi ng tem pera ture (°C) | Compr essing roll temper ature (°C) | Compre ssing line pressur e (ton/cm) | Mixture density (g/cc) |
| Example 1 | 39.1 3 | sequent ially drying at 138 °C, 142 °C, 145 °C, 150 °C | 25 | 0.83 | 2.23 | 22.8 5 | 70 | 25 | 0.0563 | 1.42 |
| Example 2 | | | | 0.92 | 2.38 | | | | 0.0563 | 1.42 |
| Example 3 | | | | 0.95 | 2.44 | | | | 0.0563 | 1.42 |
| Example 4 | | | | 0.83 | 2.23 | | | | 0.0934 | 1.53 |
| Comparative Example 1 | | | | 1.1 | 2.7 | | | | 0.0563 | 1.42 |
| Comparative Example 2 | | | | 0.83 | 2.23 | | | | 0.1046 | 1.6 |

### Evaluation Example 1. Pore Characteristics and Ionic Resistance Characteristics of Positive Electrode and Negative Electrode

The positive electrodes according to Examples 1 to 4 and Comparative Examples 1 to 2 were respectively measured with respect to a pore size and porosity through mercury intrusion, wherein mercury was intruded into pores of each sample by using unique properties of the mercury, which does not wet solids, and applying a pressure of 360,000 to 361,727 psia thereto to measure an amount of the intruded mercury with a mercury porosimeter, which was used to measure a volume of total pores, a pore size, a surface area of the pores, etc. The results are shown in Table 2.

Subsequently, the negative electrodes of Examples 1 to 4 and Comparative Examples 1 to 2 were respectively measured with respect to ionic resistance. A symmetric cell consisting of two negative electrodes was manufactured and subjected to SC-EIS (square current electrochemical impedance spectroscopy) at an amplitude Va of 5 mV, and the measurement result was analyzed by using a transmission line model theory to separate ion movement resistance (Rion) alone of the negative electrodes among internal resistance, and thus obtain the ionic resistance, and the results are shown in Table 2.

**Table 2:**

| | Positive electrode pore size (µm) | Positive electrode porosity (%) | Ionic resistance of negative electrode (Ωcm²) |
|---|---|---|---|
| Example 1 | 0.86 | 33 | 18.8 |
| Example 2 | 0.69 | 28 | 18.8 |
| Example 3 | 0.63 | 25 | 18.8 |
| Example 4 | 0.86 | 33 | 17.6 |
| Comparative Example 1 | 0.55 | 22 | 18.8 |
| Comparative Example 2 | 0.86 | 33 | 21.2 |

### Evaluation Example 2. Evaluation of Rapid Charging Characteristics

The rechargeable lithium battery cells of Examples 1 to 4 and Comparative Examples 1 to 2 were charged at a constant current of 1.68 C at 25 °C for 25 minutes to obtain a charging amount, which was used to evaluate rapid charging characteristics.

The results are shown in Table 3.

Evaluation criteria:
- charging amount of greater than or equal to 80%: O
- charging amount of less than 80%: fail

**Table 3:**

| | Success or fail |
|---|---|
| Example 1 | O |
| Example 2 | O |
| Example 3 | O |
| Example 4 | O |
| Comparative Example 1 | Fail |
| Comparative Example 2 | Fail |

### Evaluation Example 3. Evaluation of Lithium Precipitation Amount

The rechargeable lithium battery cells of Examples 1 to 4 and Comparative Examples 1 to 2 were discharged at 0.05 C without a pause immediately after the rapid charging evaluation of Evaluation Example 2 (after charging at a constant current of 1.68 C for 25 minutes at 25 °C) to obtain a voltage graph according to capacity, and then, an area under the graph with an inflection was calculated to obtain a lithium precipitation amount, and the results are shown in Table 4.

**Table 4:**

| | Lithium precipitation amount (wt%) |
|---|---|
| Example 1 | 0.9 |
| Example 2 | 0.9 |
| Example 3 | 0.9 |
| Example 4 | 0.1 |
| Comparative Example 1 | 0.9 |
| Comparative Example 2 | 1.4 |

### Summary

Referring to Table 3 according to Evaluation Example 2, Examples 1 to 4 were confirmed to exhibit rapid charging characteristics.

Referring to Table 4 according to Evaluation Example 3, Examples 1 to 4 and Comparative Example 1 exhibited a lithium precipitation amount of less than 1 wt% during the rapid charging. As the lithium precipitation amount is lower, a higher rate and desired or advantageous lifecycle characteristics may be achieved during the rapid charging and discharging.

However, Comparative Example 1 exhibited a failure in the rapid charging characteristic evaluation, which confirmed that the design of the positive and negative electrodes should be appropriately adjusted to ensure a lithium precipitation amount of 1 wt%, and to satisfy the rapid charging characteristics.

For example, Comparative Example 1, in which the negative electrode had ionic resistance within the desired range but the positive electrode had porosity and a pore size out of the desired ranges, was confirmed to satisfy a lithium precipitation amount of less than 1 wt% but not satisfy rapid charging characteristics. Comparative Example 2, in which the positive electrode had porosity and a pore size within the desired ranges, but the negative electrode had ionic resistance out of the desired range, was confirmed to not satisfy the rapid charging characteristics and exhibited a lithium precipitation amount of 1.4 wt%, which is not less than 1 wt%.

On the other hand, the rechargeable lithium battery cells of Examples 1 to 4 satisfied rapid charging characteristics and a lithium precipitation amount of less than 1 wt%, which indicates that in order to ensure rapid charging characteristics and a lithium precipitation amount of less than 1 wt%, porosity and a pore size of a positive electrode and ionic resistance of a negative electrode should be adjusted within the desired ranges.

In addition, in order to achieve desired porosity and pore size of the positive electrode and satisfy ionic resistance of the negative electrode, a positive electrode mixture density and a negative electrode mixture density were confirmed to be adjusted to satisfy the desired ranges.

While this disclosure has been described in connection with what is presently considered to be practical example embodiments, it is to be understood that the disclosure is not limited to the disclosed example embodiments, but, on the contrary, is intended to cover various modifications and equivalent arrangements included within the scope of the appended claims.

### Description of Symbols:

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

## Claims

1. A rechargeable lithium battery, comprising:
a positive electrode including a positive electrode current collector and a positive electrode active material layer on the positive electrode current collector and including a lithium iron phosphate-based positive electrode active material,
a negative electrode including a negative electrode current collector and a negative electrode active material layer on the negative electrode current collector and including a carbon-based negative electrode active material, and
an electrolyte,
wherein the positive electrode includes pores with a size of about 0.6 µm to about 1 µm,
the positive electrode has a porosity that is greater than or equal to about 23%, and
the negative electrode has an ionic resistance that is less than or equal to about 20 Ωcm².

2. The rechargeable lithium battery as claimed in claim 1, wherein the lithium iron phosphate-based positive electrode active material is represented by one of Chemical Formula 1 and 2:
Chemical Formula 1: Liₐ₁Fe₍₁₋ₓ₁₎M¹ₓ₁PO₄
wherein, in Chemical Formula 1, 0.90≤a1≤1.5, 0≤x1≤0.4, and M¹ comprises at least one of Al, B, Ca, Ce, Cr, Cu, La, Mg, Mn, Mo, Nb, Ni, Si, Sn, Sr, Ti, V, W, Y, Zn, and Zr;
Chemical Formula 2: Lia₂Mnₓ₂Fe_{(1-x2-y2)}M²_{y2}PO₄
wherein, in Chemical Formula 2, 0.90≤a2≤1.5, 0.1≤x2≤0.9, and M² comprises at least one of Al, B, Ca, Ce, Cr, Cu, La, Mg, Mo, Nb, Ni, Si, Sn, Sr, Ti, V, W, Y, Zn, and Zr.

3. The rechargeable lithium battery as claimed in claim 1 or claim 2, wherein the lithium iron phosphate-based positive electrode active material has an average particle diameter of about 0.01 µm to about 4 µm.

4. The rechargeable lithium battery as claimed in any one of claims 1 to 3, wherein the positive electrode has a porosity of about 23% to about 50%.

5. The rechargeable lithium battery as claimed in any one of claims 1 to 4, wherein the positive electrode active material layer has a mixture density of about 1 g/cc to about 2.69 g/cc.

6. The rechargeable lithium battery as claimed in any one of claims 1 to 5, wherein the positive electrode active material layer has a thickness of about 145 µm to about 180 µm.

7. The rechargeable lithium battery as claimed in any one of claims 1 to 6, wherein an amount of the lithium iron phosphate-based positive electrode active material is about 60 wt% to about 99.9 wt% based on 100 wt% of the positive electrode active material layer.

8. The rechargeable lithium battery as claimed in any one of claims 1 to 7, wherein:
the positive electrode active material layer further includes a binder and a conductive material,
an amount of the binder is about 0.1 wt% to about 5 wt% based on 100 wt% of the positive electrode active material layer, and
an amount of the conductive material is about 0.1 wt% to about 5 wt% based on 100 wt% of the positive electrode active material layer.

9. The rechargeable lithium battery as claimed in any one of claims 1 to 8, wherein the negative electrode has an ionic resistance of about 15 Ωcm² to about 20 Ωcm².

10. The rechargeable lithium battery as claimed in any one of claims 1 to 9, wherein the negative electrode active material layer has a mixture density of about 1 g/cc to about 1.59 g/cc.

11. The rechargeable lithium battery as claimed in any one of claims 1 to 10, wherein the negative electrode active material layer has a thickness of about 100 µm to about 200 µm.

12. The rechargeable lithium battery as claimed in any one of claims 1 to 11, wherein when charged for 25 minutes at 25 °C with a constant current of 1.68 C, a charge level is greater than or equal to about 80%.

13. The rechargeable lithium battery as claimed in any one of claims 1 to 12, wherein when charging at 25 °C with a constant current of 1.68 C for 25 minutes and discharging at 0.05 C once, an amount of lithium precipitation on the negative electrode surface, analyzed through a voltage graph according to capacity during discharge, is less than or equal to about 1 wt% based on 100 wt% of the negative electrode active material layer.
